# EUROPEAN PATENT SPECIFICATION

(11) **EP 1 721 517 B1**
(45) Date of publication and mention of the grant of the patent: **15.02.2012**
(21) Application number: 06113672.7
(22) Date of filing: 09.05.2006
(51) Int. Cl.: A01F 25/14, A01D 87/00

(54) **Apparatus and bag for processing a material**
Vorrichtung und Sack zum Bearbeiten eines Gutes
Appareil et sac pour le traitement d'un matériau

(30) Priority: 12.05.2005 IT BO20050339
(43) Date of publication of application: 15.11.2006
(73) Proprietor: Nobili S.p.A., 40062 Molinella (Bologna) (IT)
(72) Inventor: ROSSI, Mario, 40062, MOLINELLA (BOLOGNA) (IT)
(74) Representative: Fanzini, Valeriano

(56) References cited:
- EP-A- 0 955 510
- FR-E- 65 281
- US-A- 3 918 502
- US-B1- 6 755 011

## Description

The present invention relates to an apparatus for processing a material, in particular in the form of a material of plant origin.

In particular, the present invention relates to an apparatus for the recovery of a material of plant origin.

Said material is preferably in the form of runners or the like, and in particular consists of pruned runners.

In the agricultural sector, once runners have been pruned, in particular in vineyards, orchards or olive groves, the branches or runners cut are usually left to fall on the ground, then chopped, leaving the chopped material to macerate on the ground.

However, this cultivation practice is considered quite harmful for the crops. Once cut, said runners not only hamper the normal performance of agricultural operations in the field, but when they are chopped and lying on the ground they are also attacked by pathogenic micro-organisms which are believed to be a source of radical rot which damages the plants from which the runners were cut. Therefore, the runners were collected by a special apparatus, which also chops them, accumulating the chopped material in a special tank made of metal which, once filled, must be emptied of the loose chopped material, which is unloaded into a body of a suitable transport vehicle.

Thus, as soon as the chopped material container is full, it has to be taken, often involving a long journey, to the collection means, in whose body or similar said material must be accumulated.

Obviously, this way of operating is quite time-consuming and complex and inconvenient for the workers. Once the runner chopping apparatus magazine is full and to prevent the machine from driving over the runners still to be collected, it is necessary to travel in reverse gear to at least the start of the row in which operations are taking place.

This way of operating is certainly difficult and problematic, as well as slow, since it is normally used between the rows of orchards or the like, which may be quite narrow.

According to another disadvantage of the traditional procedure for collecting and chopping runners, once cut said runners are accumulated directly in a body, without any possibility of drying them if they are too moist and, therefore, not very suitable for the subsequent processing.

According to an advantageous aspect, a process was provided for processing a material, in particular of plant origin, preferably in the form of runners or the like, especially consisting of pruned runners. The process involves filling a container and is characterised in that a sack container is used as the collection container.

In this way, the material inserted in the container can be handled in a convenient and substantially independent way.

Thanks to the use of sack containers for the material, more flexible subsequent movement or use of the material processed is achieved.

US 3,918,502 discloses an apparatus of harvesting and storing of food products of various kinds and relates particularly to the apparatus of harvesting and storing animal feeds. The apparatus includes a frame supporting a pickup unit and blower fan receiving hay, silage, haylage or other forage material from the pickup unit, chops it and airlifts such material to a relatively large flexible collapsible container mounted on a relatively large wagon connected behind the apparatus. Such wagon having a respective frame supported by ground-engaging wheels.

According to the invention, an apparatus according to claim 1 is provided, for processing a material, in particular of plant origin, preferably in the form of runners or the like, especially consisting of pruned runners. The apparatus comprises a support framework and container filling means and it is characterised in that in the normal operating condition, the sack is suspended off the ground.

The sack container can easily be released from the apparatus and left on the ground. This means that it is possible to avoid having to travel to the means of transport once the container is full.

Moreover, an apparatus for the recovery of material of plant origin is obtained which has a limited weight and so does not excessively crush the ground on which it operates.

The technical characteristics of the invention are clearly described in the claims below and its advantages are more apparent from the detailed description which follows, with reference to the accompanying drawings which illustrate a preferred, non-limiting embodiment of the invention, and in which:
- Figure 1 is a perspective view of the apparatus, in particular for the recovery of material of plant origin, according to a preferred embodiment of the present invention, in a normal operating condition in which it is towed behind a suitable tractor;
- Figure 2 is a side view, partly in cross-section, of the preferred embodiment of the apparatus according to the present invention;
- Figure 3 is a perspective view of the rear part of the processing apparatus according to the present invention, in an operating condition in which it is unloading the sack container onto the ground;
- Figure 4 is a perspective view of the rear part of the preferred embodiment of a processing apparatus, in a third operating condition in which it is unloading the sack onto a suitable platform of a transportation machine;
- Figure 5 is an exploded perspective view of a part of the apparatus for processing a material according to the present invention;
- Figure 6 is a perspective view of a detail of the preferred embodiment of an apparatus according to the present invention, illustrating the connecting zone between the support frame of the sack support means and the apparatus framework;
- Figure 7 is a perspective view of a preferred embodiment of a sack according to the present invention;
- Figure 8 is a perspective view of a detail of the base wall of the preferred embodiment of the sack according to the present invention;
- Figure 9 is a perspective view of a detail of a corresponding side wall of the preferred embodiment of the sack according to the present invention;
- Figure 10 is a side view, partly in cross-section, of a second preferred embodiment of the apparatus according to the present invention;
- Figure 11 is a perspective view, partly in cross-section, from the front, of the second preferred embodiment of the apparatus according to the present invention, in a condition in which it is unloading onto a raised support surface or platform;
- Figure 12 is a perspective rear view of the second preferred embodiment of the apparatus according to the present invention, in a condition in which it is unloading onto the ground;
- Figure 13 is a perspective view of the rear part of a third preferred embodiment of the apparatus according to the present invention;
- Figure 14 is a perspective detail view showing the sack connecting zone in the third preferred embodiment of the apparatus according to the present invention;
- Figure 15 is a perspective detail view showing the connecting zone, in the sack detached condition, of the third preferred embodiment of the apparatus according to the present invention.

The present advantageous process for processing, and in particular recovery of, a material of plant origin, in particular in the form of runners or the like, especially consisting of pruned runners, involves filling a suitable container with said material and, advantageously, using a sack container as the collection container.

This advantageous collection of the material, in suitable quantities, in a respective sack allows convenient and substantially independent handling of the material inserted in said container and, in addition, allows more flexible subsequent movement or use of the material.

Advantageously, before filling the container the material is suitably processed, and, in particular, it is chopped.

In particular, said chopping is such that it produces a predetermined average size of the portions or pieces of material chopped. Said predetermined average size of the chopped material is suitably selected according to the type of use for which the material is preferably intended.

A chopped material size equal to that of common pellet fuels of plant origin (for example, the chopped particle preferably having a length of between 1 cm and 5 cm and a diameter of between 5 and 8 mm) would be preferred for use of this chopped material in suitable heaters, or in suitable electricity production plant.

The present process also involves collection of the material directly from the ground on which it was left to fall after being cut.

Moreover, in conformity with another advantageous and preferred aspect of the process, the sack container is released or allowed to fall onto the collection field.

The sacks can then be collected from the field conveniently at a later time.

Moreover, advantageously the present sack container is in communication with the air in the surrounding environment. In this way, the material can be dried directly in the field inside the collection sack.

According to another advantageous aspect, the chopped material is accumulated in a plurality of containers, in particular sack containers, designed to contain a predetermined quantity of said material.

A suitable division of the chopped material into ready-made portions is achieved, facilitating subsequent use of the material.

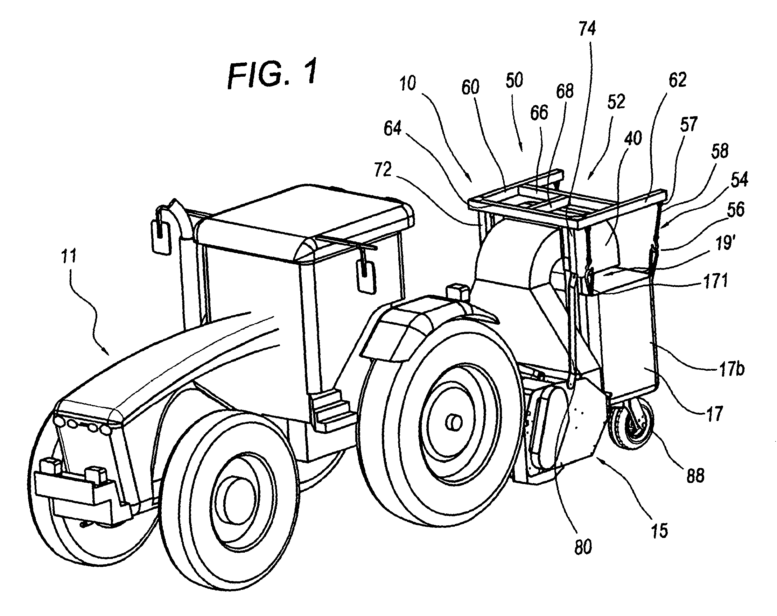

A first preferred embodiment of the apparatus 10 for processing material, in particular of plant origin, is illustrated in Figures 1 to 6.

The present processing apparatus 10 is particularly suitable for processing pruned runners or branches in orchards, olive groves, vineyards and the like.

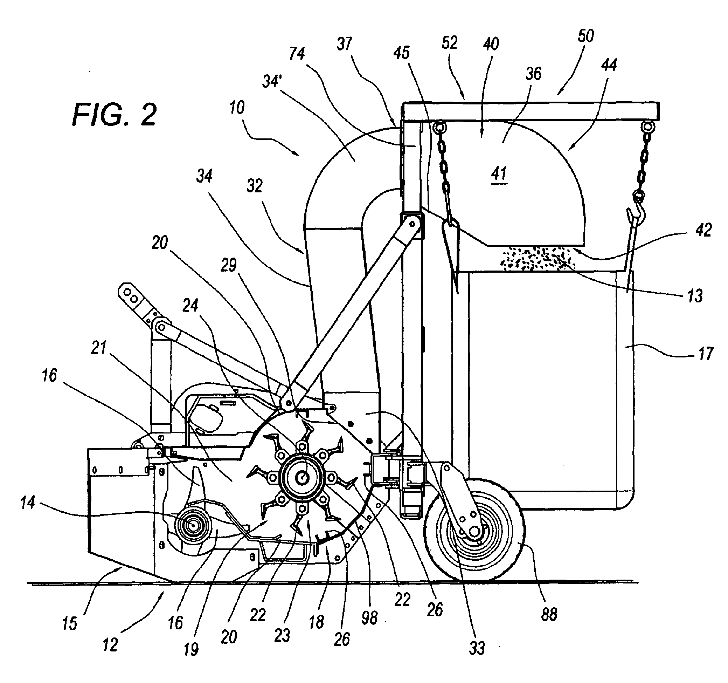

As illustrated, the present apparatus 10 is preferably in the form of an apparatus towed behind a suitable tractor 11 and comprises a support framework, labelled 15 as a whole, which moves on wheels, labelled 88 and 90, connected to the framework 15, as explained in further detail below. As can be seen, in particular in Figure 2, the apparatus 10 comprises means 12 for collecting the material from the ground, comprising a rotary shaft 14, on which a set of radial teeth or blades 16 are mounted, transversally spaced from one another and having one end which makes contact with the ground and picks up the runner from the ground.

The transversal distance between the collection teeth or blades is such that it allows the cut branches of the trees to be lifted and is also such that it does not lift unwanted material, such as stones or the like.

A plurality of transversally aligned sets of teeth or blades extend from the rotary shaft 14. Said plurality of sets of teeth or blades are circumferentially spaced from one another and are such that the teeth or blades of one set are in a transversal position between the teeth or blades of the circumferentially adjacent set.

In practice, on the collection means, in a transversal zone of the support shaft 14, there are four pick up rods 16, equidistant from one another. These collection teeth or blades are housed in a front zone of the apparatus 10, at a height such that, during operation, said free ends of the rods 16 make contact with the ground enough to guarantee collection of the desired material.

Downstream of the material collection means 12, according to the direction of material processing, there are processing means, labelled 18 as a whole, which, in particular, are in the form of means for chopping the material 13, which reduce the coarse wooden material, or the like, into pieces of a very small size.

As illustrated, the chopping means 18 comprise a chopping chamber 19, formed by a containment guard 20, the chamber 19 being in communication, via a passage 21, with the runner collection means and housing processing or chopping parts, comprising pluralities of clubs or beaters 22, transversally spaced from one another and arranged in circumferential rows.

Each club or beater 22 is fixed to a shared transversal shaft 24, by means of a support 23, relative to which it is conveniently jointed, and extends radially, having one end which helps contact means 26 in the chopping chamber to perform the chopping.

Said contact means 26 comprise shaped means, extending transversally and located in the chamber, in a suitable peripheral position, to achieve interference with the trajectory of the clubs and allow a desired chopping of the material.

The present apparatus comprises advantageous means for filling a suitable container.

Advantageously, the present filling means are suitable for filling a sack container 17.

In particular, the filling means comprise advantageous means for feeding the material processed 13 towards and into the container 17, the feed means extending, according to the direction of material processing, downstream of the processing chamber 20.

As illustrated, in particular in Figure 2, the feed means comprise a duct 32, for conveying the material towards the sack 17, extending downstream of the chopping chamber 19, with which it is in communication via a suitable opening 29, substantially on the opposite side to the opening 21 for runner infeed into the chopping chamber 19.

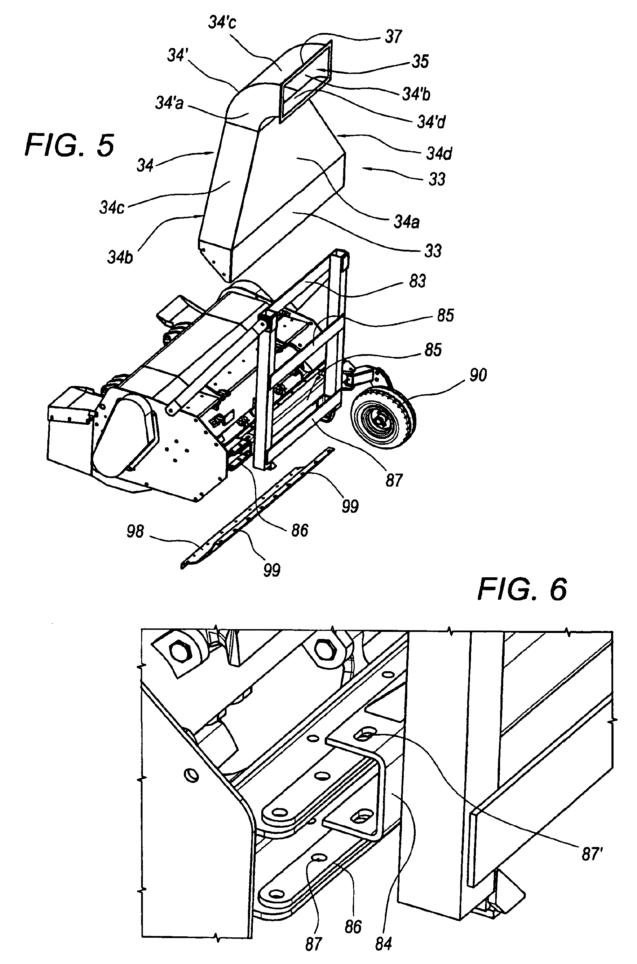

As is also evident from Figure 5, the conveyor duct 32 has a first section 34, extending upwards and forming a section with variable cross-section, in particular with variable width, which gradually narrows upwards.

As illustrated, the first section 34 of the conveyor duct extends at a slight angle towards the front part of the apparatus and has a rear wall 34a, a front wall 34b, extending transversally, and short side walls 34c and 34d, which are angled in such a way that they converge upwards.

Downstream of said upwardly extending section 34 there is an arc-shaped section, having a substantially constant diameter or cross-section, labelled 34', consisting of opposite side walls 34'a, 34'b and corresponding curved conveyor walls, respectively internal and external, that is to say, upper and lower, 34'c and 34'd.

This shape of the intermediate conveyor section 34' of the conveyor duct allows any material which, due to insufficient thrust imparted by the propelling action inside the processing chamber 20, does not reach the sack container 17, to easily go back towards the chamber 19, where it may be chopped and thrust out again.

As can be seen, even with reference to Figure 5, the intermediate section 34' of the conveyor duct has an opening 35 which, during normal operation of the apparatus, is perfectly opposite a corresponding opening, not illustrated in the drawings of this first preferred embodiment of the invention, in the end section 36 of the material feed duct.

To allow easy connection between the intermediate section 34' and the diffuser end 36 of the conveyor duct, the opening 35 is bordered by a flanged portion 37, consisting of an edge extending around the circumference of the opening 35, extending from the end of the walls 34'a, 34'b, 34'c, 34'd of the intermediate portion 34' of the conveyor duct. However, according to another embodiment, a similar flanged portion could be positioned around the inlet opening of the mobile duct 36.

In the accompanying drawings the numeral 33 denotes a lower section of the conveyor duct 32, which connects the duct to the framework 15 at the opening 29 through which the material exits the chopping chamber.

Advantageously, there are means for distributed emission of the material 13 in the container 17.

These means for distributed emission are formed by the end section 36 of the material conveyor duct 32, which has an extended cross-section.

As illustrated, this distributed emission is particularly achieved, in the longitudinal direction, thanks to the longitudinal extension of the material feed duct 36.

Moreover, said distributed emission in a radial direction is achieved thanks to the fact that the end duct 36 also expands transversally relative to the size of the delivery duct upstream of the end part.

This end section 36 of the conveyor duct comprises a first and a second side wall, substantially vertical, labelled 41 and 43, and a lower section, substantially linear, 45, angled downwards. Moreover, the end section 36 is completed by a large upper curved section 44, extending on the outer or rear side of the end duct 36, and forming a free expansion space for the flow of processed material conveyed. As illustrated, the conveyor duct 32 has the end section 36 extending horizontally, projecting towards the rear part and has a large lower opening 42, having a quadrangular shape, designed to allow the material to fall into a large substantially central zone of the collection sack 17. Therefore, the material is certain to fall into the container.

There are also advantageous means for propelling the material in the delivery duct. Said propulsion means consist of the material processing means, in particular the chopping means.

In the chopping chamber 20 a kind of pressure is built up on the material, such that it allows the material to reach the sack by passing through the delivery duct 32.

In particular, as already indicated, the chopping means are such that they produce a chopped material of a predetermined size which is, moreover, such that it can easily be thrust towards the sack. Said predetermined size of the chopped material is suitably selected according to the type of use for which the material is intended, in particular for providing energy. A chopped material size equal to that of common "pellet" fuels - for example, chopped material in pieces having a length of between 1 cm and 5 cm and a diameter of between 5 and 8 mm - would be preferred, above all for use of this chopped material in suitable heaters, or in fuel-burning electricity production plant.

For this purpose, the number of chopping clubs and/or the speed of rotation of the clubs and/or the number or other characteristics of the contact surfaces are selected to produce chopped material of the desired size.

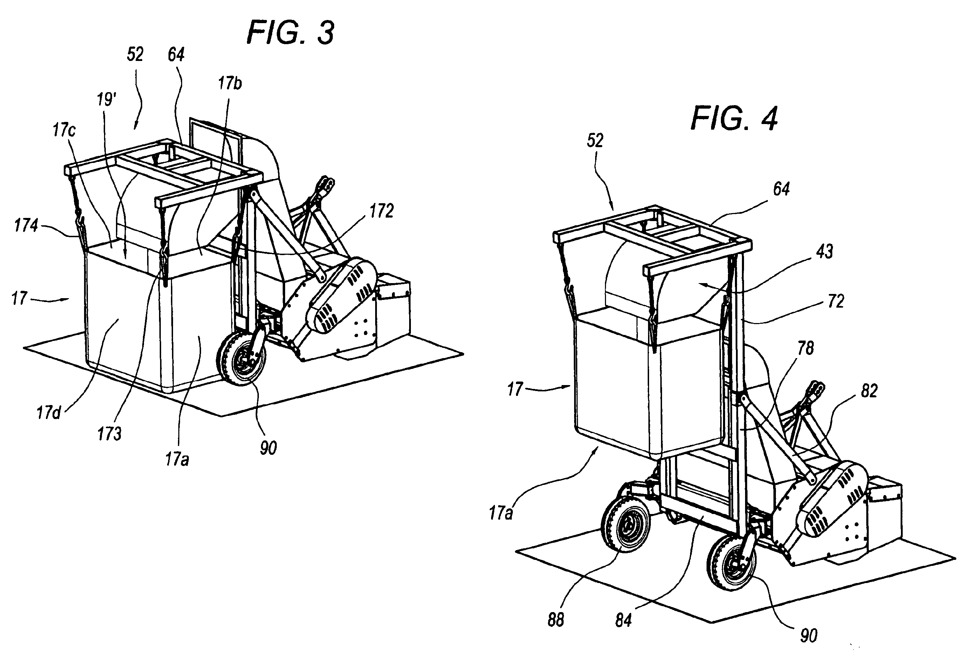

As can be seen in particular in Figures 3 and 4, the duct for feeding material towards the sack comprises a first part 34 and 34', which remains fixed to the support framework of the apparatus, and it also has a part or portion 36 mobile together with the sack 17, in such a way as to allow, as is described in more detail below, easy movement of the sack 17 and the achievement of a simple structure with limited cost for the present apparatus.

Advantageously, the filling means of the present apparatus comprise support means 50 for a sack container 17.

In particular, these support means are designed to hold the container in such a way as to allow easy feed of the falling material into the container, as is clearly illustrated in Figure 2.

Advantageously, these sack container 17 support means are designed to support the sack container in the open condition, for filling by the feed means, with the sack inlet opening 19', on which the upper edges of the sack are located, delimiting the mouth 19', substantially lying in the same horizontal plane, at least when the apparatus is travelling in a horizontal direction or rests on a horizontal surface. In practice, with these sack container support means the side walls of the container extend, in operation, substantially vertically.

Moreover, the container support means comprise means designed to provide a releasable retaining action, during operation, on the container, described in more detail below.

As illustrated in the accompanying drawings, these sack container 17 support means 50 comprise a frame 52, extending substantially horizontally, from which advantageous means 54 for connecting or retaining the sack to the frame 52 extend.

These sack connecting means 54 comprise a plurality of coupling elements 56, in the form of hooks for handles or loop elements on the sack 17, described in more detail below.

As illustrated, in particular there are four hook elements 56, for the same number of sack loops, so that the container is held at the vertices or corners of the sack 17.

As illustrated, the sack connecting means 54 comprise chain elements 58, supporting a hook element 56, fixed to retaining rings 57, extending below the profile, or section bar, of the frame 52. The support frame 52 in turn comprises a pair of side longitudinal members 60, 62, bearing connecting or retaining elements 54, and a pair of cross members 64, 66, respectively, at the front end, or upstream, and at the halfway line of the longitudinal members 60, 62.

In Figure 1, the numeral 68 denotes a short longitudinal connecting and strengthening element between the cross members 64, 66, extending in a substantially intermediate or central position relative to the frame 52.

As illustrated, the sack container support means 50 also comprise a first and a second upright 70, 72, fixed at their upper ends to the front cross member 64 of the horizontal frame 52.

The end means 36 of the material 13 conveyor duct are, as illustrated, integral with the mobile frame 52, for the sack connecting means 54.

As can be seen, in particular in Figure 2, the end section 36 of the material feed duct, which interfaces with the fixed section 34' of the duct 32, extends between the uprights 70, 72 of the mobile frame.

There are advantageous material container 17 movement means.

In particular, these container 17 movement means are designed to move the sack between an operating position, in particular a position in which the container is filled, illustrated in Figures 1 and 2, and at least one position, in particular a first and a second position which are differentiated, for container unloading.

In a particularly advantageous way, one unloading position is, as illustrated in Figure 3, a position in which the container is unloaded onto the ground. In practice, it is a lowered position, in which the base of the sack container 17 rests on the ground and which allows the handles to be slipped off the coupling means 56.

The sack may be left on the ground at the point of the journey where the desired filling was achieved, or, after moving in reverse gear between the rows to the start of the row, it may be taken to a position where it will not hamper subsequent processing between the same rows.

At this point the full sack 17 can be substituted with a new empty sack, which is coupled, preferably in the lowered position, with its handles, which are slipped onto the hooks 56, and with the sack support means, which are suitably lifted until the filling position is reached.

Processing can now continue with the new sack which is gradually filled and held in said lifted position for normal operation.

This normal lifted position for operation is an intermediate position of the section which may be covered by the support frame movement means. In practice, in the normal operating position the sack 17 hangs from the support frame 50, with its base off the ground.

In the normal operating condition, the sack is suspended off the ground.

According to another and particularly advantageous aspect, illustrated in Figure 4, another and second unloading position is a container lifted position, in particular a position in which it is lifted above the normal filling position, said position being suitable for transferring the container onto the support surface of a transport vehicle. In practice, in this lifted position, by moving the apparatus in reverse gear, it is possible to position the sack on the support platform, for example the platform of the body of a truck or other vehicle, suitable for transporting the material to the point of use.

Therefore, the sack movement means advantageously act on the sack support frame 52, moving it from an intermediate operating position to a lowered unloading position, or to a lifted unloading position.

In particular, the movement means comprise actuator means, acting on the uprights 72, 74 of the mobile support frame.

For this purpose, there are fixed side uprights, labelled 76, 78 in the accompanying drawings, connected in a suitable way to the apparatus framework 15. Lower ends of the mobile uprights 72, 74 slide inside the fixed uprights.

Said fixed side uprights 76, 78 are made integral with one another by extended plates, forming upper, intermediate and lower cross members 83, 85, 87, vertically spaced from one another, so as to form a fixed frame for connection to the apparatus framework.

In particular, the sack movement means are in the form of first and second actuators, or cylinders, in particular hydraulic, acting inside the fixed side uprights 76, 78, between the latter and the uprights 72, 74 of the mobile sack support frame.

Advantageously, there are means for a removable connection of the means for filling a container to the machine framework.

Said means for a removable connection between the filling means and the support framework comprise resting means and retaining means.

The means for resting on the framework comprise, at the bottom of the fixed uprights 76, 78 of the fixed frame, a transversal section bar 84, having a "C" shape, which can be connected to a corresponding rear transversal section bar 86 of the framework, also having a "C" shape and facing said section bar 84, in such a way that the flanges of the section bar 84 can be rested on the flanges of the apparatus section bar 86.

As can be seen in particular in Figure 6, the rear transversal section bar 86 of the framework and the lower section bar 84 of the support means for the filling means comprise corresponding holes, distributed transversally, in which corresponding pins or bolts can engage, forming the retaining means, not illustrated in detail in the accompanying drawings. In Figure 6 the connecting holes are labelled 87' and 87 respectively.

To complete the connection of the filling means to the machine framework 15, there are advantageous tie rods 80, 82, connecting the upper part of the fixed uprights 76, 78 to the framework 15 at the side upper zone of the chopping chamber.

Also fixed to the rear upright 86 of the framework are the wheels 88, 90, in particular fixed to the outside of the end parts of the section bar 84 for removable connection of the filling means, as is particularly evident in Figure 5.

However, it shall be understood that the use, in place of the wheels, of a transversal roller would be possible, positioned in such a way that it did not interfere with the sack 17 or any trailers towed behind the apparatus.

In Figure 5, the numeral 98 denotes a panel which can be connected, with pins or screws that can be inserted in the holes 99 in the panel and in corresponding holes in the rear section bar 86, the panel 98 allowing the lower part of the chopping chamber 19 to be closed, preventing any material from being unloaded onto the ground. With such a closing panel 98, the present filling system can also easily be used on chopping and unloading machines previously set up to unload the runners directly onto the ground.

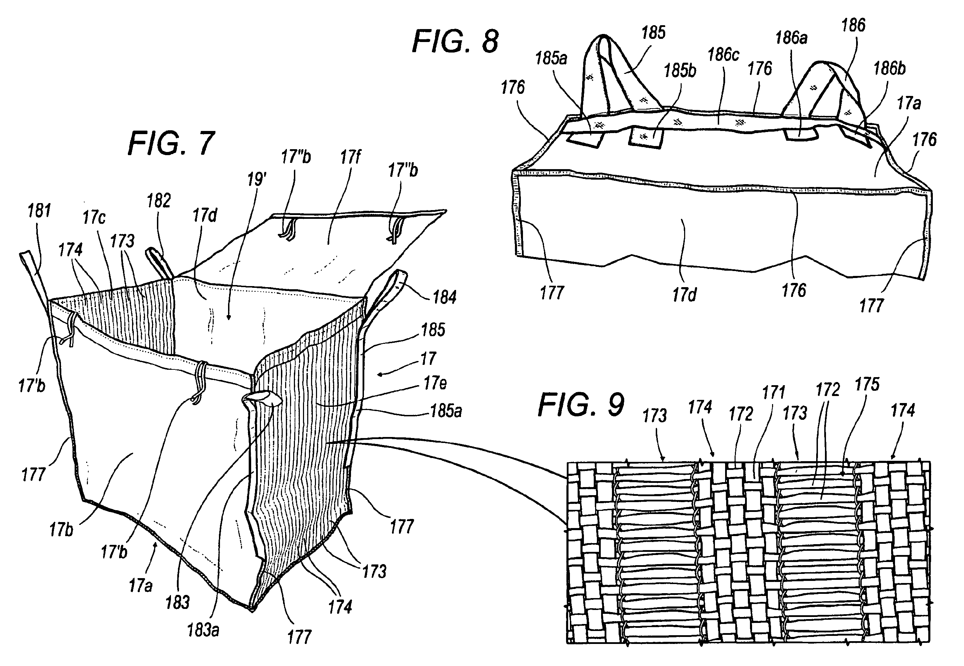

As shown in Figures 7 to 9, the advantageous sack container 17 has a base wall 17a and a plurality of side walls, respectively labelled 17b, 17c, 17d and 17e.

The sack, having a quadrangular shape, in particular that of a rectangle, with the short sides 17c and 17e in operation extending parallel with the sides of the apparatus, is, in operation, open at the top, as shown in Figure 1, so that the material with which it is filled can fall into it under the effect of gravity.

However, as illustrated in Figure 1, the sack has a wall 17f for closing said sack access opening 19'. Said upper closing wall 17f is connected to the rear wall 17d along the upper edge of the latter and is held in the closed position by strings 17'b, extending from the front wall 17b, suitable for tying to the strings 17"b extending from the free edge of the closing wall 17f.

The walls forming the sack containment body are preferably made of pieces of cloth stitched or joined together and which are preferably made of a synthetic fabric or another suitable material.

As can be seen in particular in Figure 9, each piece of cloth has a structure consisting of enlarged strands or strips which are woven together. In particular, there are vertical strips 171 and horizontal strips 172, woven together in such a way as to produce an even surface, able to hold the pieces and granules, even fine, of which the material to be recovered consists.

Advantageously, on the sack there are means for exchanging air with the outside environment, in particular consisting of linear portions or bands 173 extending vertically and separated by linear portions or bands 174 which are substantially not permeable to air, also extending vertically.

As illustrated in Figure 9, the permeable portions are formed solely by the presence of said horizontal strips 172 of fabric. The weave of the strips of cloth is such that in these permeable zones 173, between horizontal or transversal strips 172, adjacent to one another, there is a space or passage 175, for the free circulation of air with the inside of the sack.

In practice, according to an advantageous aspect of the sack, the zones permeable to air are therefore formed by a sort of mesh structure of the corresponding portion of sack wall, in which the weave of the mesh is such that the material is contained and free passage is left for a suitable air flow. In other words, the term surface permeable to air refers to a surface able to hold the material contained in the sack, but which also allows air flows to pass directly, without obstacles, through the surface.

Advantageously, the permeable portion is located in the opposite short side walls 17c and 17e of the sack, so as to allow the passage of an advantageous air flow through the sack and so more rapid drying of the material contained in it.

As illustrated, said permeable bands 173, and the non-permeable bands 174 which separate them, extend over the entire height of the wall of the sack and also globally form the entire surface of the wall of the sack.

Advantageously, the sack comprises means for strengthening the base, in the form of strengthening stitching.

According to an embodiment illustrated in Figure 8, said strengthening of the base comprises edge stitching 176 on all of the edges of the base.

There is similar strengthening at the edges of the side walls of the sack and formed by edge stitching 177 on all of the side edges connecting the side walls of the sack.

In particular, there is a plurality of sack connecting or suspension handles, labelled 181, 182, 183, 184 in the accompanying drawings, said connecting handles being at the upper corners of the sack, whilst in the lower part of the sack, preferably on the base, there are further handles 185, 186, suitable for allowing the sack to be tipped and formed by tapes, whose ends 185a, 185b, 186a, 186b are retained by a transversal tape 186c integral with, and in particular stitched to, the base 17a of the sack at a side zone of it.

As shown in Figure 7, the handles 181, 182, 183 and 184 are formed by tapes, whose ends, and sections adjacent to them (only sections 183a and 184a being illustrated in Figure 7) are anchored to the sack at the corners, or edges, where the adjacent side walls are joined, on the outside of the latter.

With this sack structure, the residues of plant origin can be left in the field, accumulated in said sacks, or under a suitable shelter, for advantageous drying of the residues.

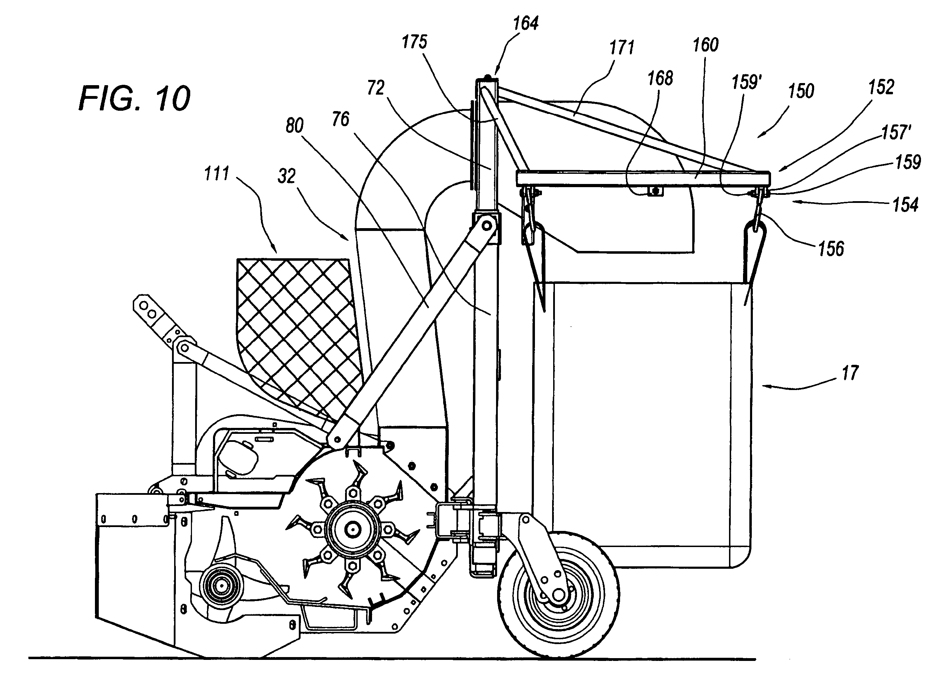

A second preferred embodiment of the apparatus is illustrated in Figures 10 to 12, in which the elements or components shared by the first embodiment are labelled with the same reference characters and, for brevity and convenience, will not be described again.

This second preferred embodiment differs from the first preferred embodiment of the apparatus in that the support framework of the apparatus has means for housing sacks 17, preferably suitably folded. In particular, these means for housing the sacks are in the form of a box or container 111, supported in front of the plant material delivery duct 32, between the side support tie rods 80, 82 of the filling means.

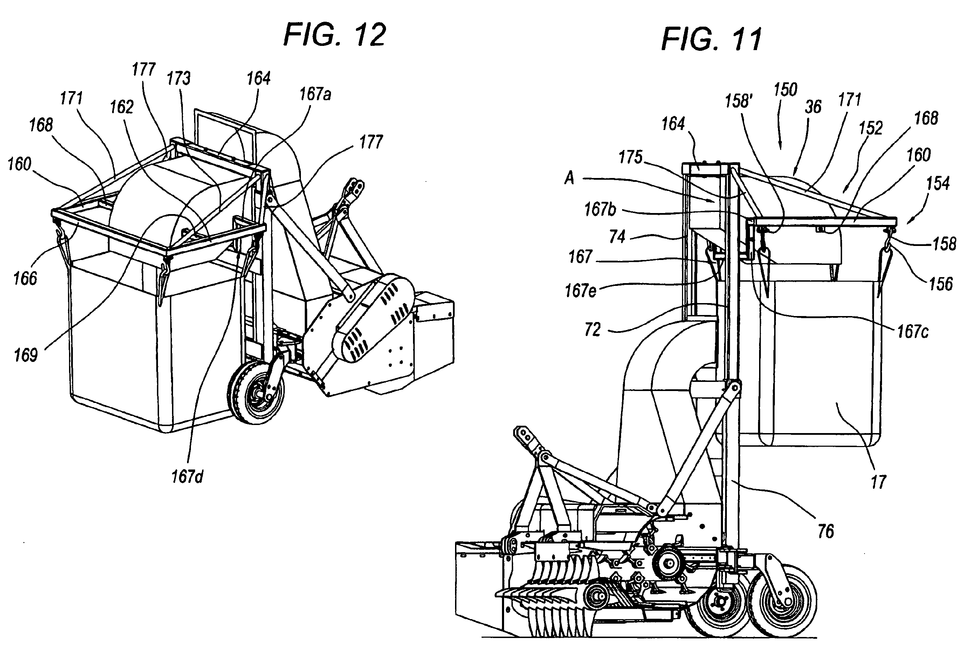

As can also be seen in Figures 11 and 12, where the sack holder box is omitted, in this second preferred embodiment there are means 150 for supporting a sack container 17 which comprise a frame 152, extending substantially horizontally, from which advantageous means 154 for connecting the sack to the frame 152 extend.

These sack connecting means 154 comprise a plurality of coupling elements 156, in the form of hooks for handles or loop elements on the sack 17.

As illustrated, in particular there are four hook elements 156, for the same number of sack 17 handles or loops located at the vertices or corners of the sack.

As illustrated, the sack connecting means 154 comprise jointed elements 158, supporting a hook element 156, fixed to retaining rings 157, extending below the profile, or section bar, of the frame 150. These jointed elements 158 are preferably in the form of a substantially semicircular metal element with holes at the opposite ends for insertion of a closing pin 159 for connecting the sack to the frame. The pin 159 has a threaded end for a locking screw 159'.

The frame 150 comprises a pair of side longitudinal members, only one - labelled 160 - being illustrated in Figure 10 to 12, bearing coupling elements, and a pair of cross members 167, 166, respectively, at the front end, or upstream, and at the rear end or downstream of the side longitudinal members 160.

The numerals 168, 169 denote short transversal elements connecting the longitudinal members 160, 162 to the end part of the material duct and extending from the longitudinal members 160, 162, in a substantially intermediate or central position, relative to the frame 152.

As illustrated, the sack container support means 150 also comprise a first and a second mobile upright 72, 74, fixed at their upper ends to the end cross member 164, forming upper horizontal frame 152 suspension means.

From said upper cross member 164 there extend downwards a first and a second longitudinal tie rod 171, 173 and a first and a second transversal tie rod 175, 177, connected to corresponding longitudinal ends of the longitudinal members 160, 162.

In turn, the cross member 167 comprises short transversal elements 167a, 167b, extending from the end upstream of the longitudinal members 160, 162 and from whose other end there extend short vertical elements 167d, 167c, to which the end part of the material duct is suitably connected, and from whose lower ends a lowered connecting cross member 167e extends.

This support frame 152 of the second embodiment has a width greater than the transversal distance between the uprights 72 and 74.

The present sack connecting means are such that they form means for radial traction on the sack. With this sack connecting means structure, in operation, the sack can be held open by applying outward traction to it.

In this second embodiment the anchoring points for the frame support means are outside the corresponding transversal dimension of the sack and sack connecting means are used which have a length such that they keep the corresponding parts of the sack to which they are connected in traction. In practice, the positioning of the anchoring points and the length of the retaining rings is such that the rings extend, when retaining the sack, at an angle to the sack handle below.

Moreover, when the full sack is to be released from the machine, by resting the base of the sack on a surface the traction applied on the connecting elements 158 can be slackened so that the sack handles can be slipped off the corresponding connection.

According to another version, the sack coupling means may also comprise length-adjustable means, to allow use of the sack support means disclosed on existing machines with different heights.

In Figure 11, the reference character A indicates the inlet opening in the mobile diffuser section 36, for the material arriving from the part 34' of the material feed means.

The chopped material may, therefore, advantageously be used as a fuel for the production of electricity in suitable plant, or simply burned in suitable heaters for domestic use or the like.

However, it shall be understood that the processed material could also be processed differently to the chopping described, that is to say, it may be intended for completely different purposes to those described above. For example, maize may be chopped and placed in sacks for use as feed for livestock.

By way of example, the present sack 17 could have side dimensions in plan view ranging between 70 and 110 cm, and preferably 110 cm for the long side and 79 cm for the short side, and a height which may, in turn, be between 50 and 110 cm, and which is preferably 95 cm.

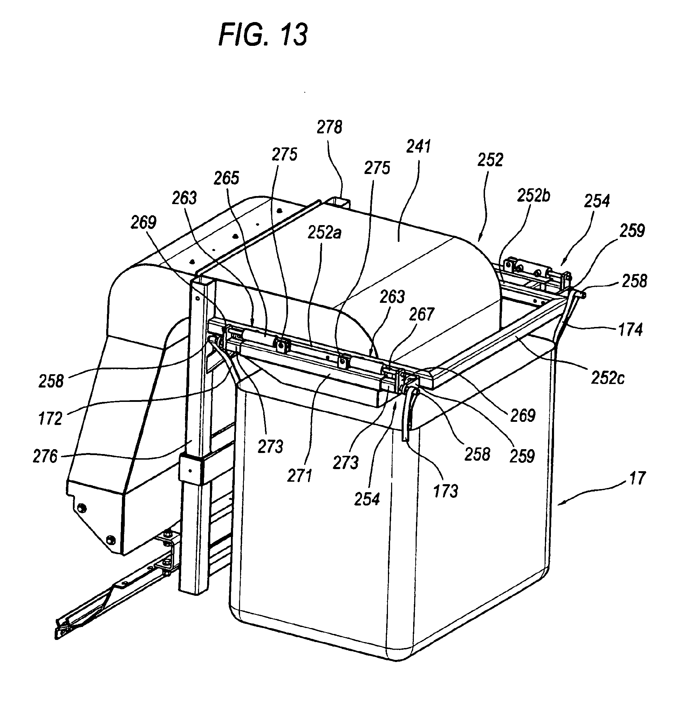

Figures 13 to 15 illustrate a third preferred embodiment of the apparatus according to the present invention.

This third preferred embodiment has a frame 252 for supporting the sack and connecting the end part 241 of the chopped product unloading duct, the frame having a height lower than the corresponding frame of the first embodiment.

As illustrated, the sack support frame 252 has a first and a second side longitudinal member 252a, 252b, connected to the support uprights 276, 278, vertically mobile, from which they project towards the rear of the machine.

The support frame 252 also comprises a cross member 252c, connecting the other ends of the longitudinal members 252a, 252b, the longitudinal members 252a, 252b substantially extending half way up the height of the side of the unloading end portion 241 of the duct which conveys the chopped product towards the sack 17.

Advantageously, the present preferred embodiment of the apparatus comprises sack connecting means of the type which can be enabled and disabled on command by the operator.

In practice, remaining comfortable in the cab, or at the driving position of the vehicle, and operating corresponding controls, the operator can easily detach the full sack with consequent automatic sack unloading from the apparatus.

The sack 17 connecting means are labelled 254 as a whole and comprise pin means 258, in particular in the form of four pins, extending horizontally and each for supporting a respective sack 17 handle.

Advantageously, the pin means 258 are mobile, driven by actuator means, between a position in which they support the sack and a position in which they release the sack 17.

The connecting means 254 also comprise, at each pin, a vertical engagement surface 259, from which the respective pin 258 extends. Said engagement surface 259 forms horizontal direction retaining means for the corresponding handle.

In this way, by suitably positioning the surfaces 259, the sack 17 can be supported, keeping the coupling handles subject to radial traction, or holding the mouth of the sack wide open.

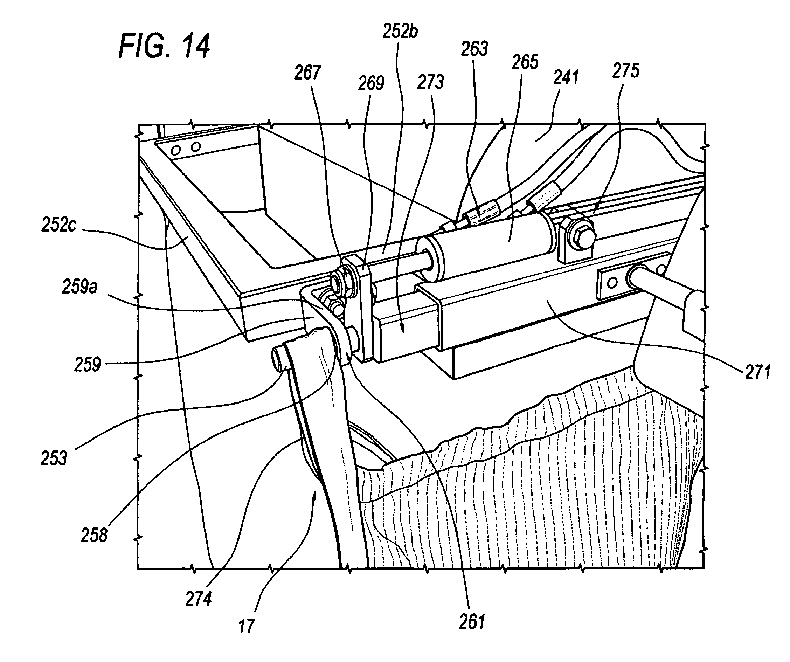

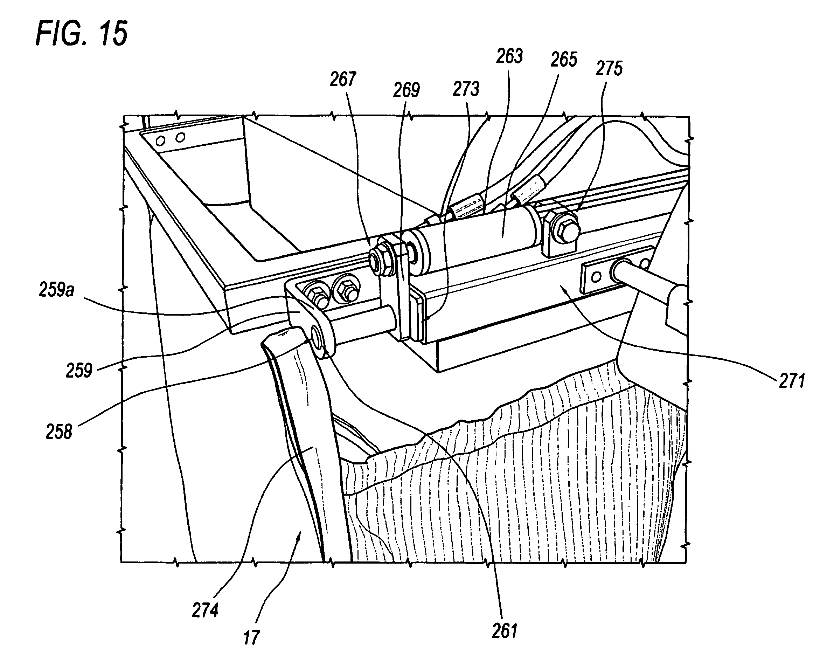

As illustrated, the contact surface 259 has a corresponding hole 261, from which there extends, in a mobile fashion, the respective pin 258, which is mobile between an extended or extracted position, outside the hole, illustrated in Figure 14, in which is supports the respective handle 274, and a retracted position inside the hole 261, illustrated in Figure 15, corresponding to release of the sack handle 274.

As illustrated, each pin 258 is driven by a corresponding actuator 263, comprising a cylinder 265, from which a rod 267 extends, which is connected to the pin 258 by a corresponding bracket 269.

As illustrated, the actuator 263 is supported on a tubular element 271 with a quadrangular cross-section supported on the corresponding longitudinal member of the frame 252, the tubular element 271 having end openings from the inside of which corresponding quadrangular elements 273, 273 extend, at the opposite sides of the tubular support element 271.

In practice, each tubular element 271 extends parallel with the respective longitudinal member and supports a pair of actuators for opposite pins 258, 258.

The mobile tubular guide elements 273 are connected, by a bracket 269, to the corresponding rod of the actuator means, extending below it.

As illustrated, each actuator 265 is suitably fixed, at 275, to the corresponding fixed guide element 271.

The corresponding pins 258 extend from the bracket 269, which consists of a substantially rectangular flat element, remaining on the extension of the mobile guide elements 273.

It may be seen how, as illustrated in Figure 14, in the supporting condition, each pin 258 extends outside its respective opening 261 and has an end portion 253, for retaining the corresponding sack handle 274.

To unload the sack from the apparatus it is enough to simultaneously operate the actuators 263, making the rod 267 retract in the cylinder 265, so that the pin 258 goes back into the hole 261, consequently freeing the handle 254 and allowing the sack to fall. In this retracted condition, the guide element 263 enters the fixed guide and support element 271.

It will be understood that the invention may be modified and adapted without thereby departing from the scope of the appended claims. Moreover, all the details of the invention may be substituted by technically equivalent elements.

## Claims

1. An apparatus (10) for processing a material of plant origin, preferably in the form of runners or the like, especially consisting of pruned runners; the apparatus comprising a support framework (15) for supporting means (12) for collecting the material, means (18) for chopping the material (13), and container filling means suitable for filling a sack container (17), the filling means comprise means for feeding the material towards a suitable container comprising a material conveyor duct (32); said sack container filling means comprising support means (150) for a sack container; the apparatus further comprising means for moving the container (17) between an operating position and an unloading position, and being **characterized in that**, in the normal operating condition, the sack is suspended off the ground.

2. The apparatus according to claim 1, **characterised in that** the means for feeding the chopped material have a section (34) fixed to the apparatus framework.

3. The apparatus according to any of the foregoing claims, **characterised in that** the material feed means have an end section (36) forming means for distributed emission of the material (13).

4. The apparatus according to claim 3, **characterised in that** the material (13) distributed emission means are formed by a longitudinal expansion of the conveyor duct (36), with a large curved section (44) on the outside or rear of the end duct (36).

5. The apparatus according to any of the foregoing claims, **characterised in that** the material feed means have an end section (36) with a large opening (42) facing downwards, allowing the material (13) to fall.

6. The apparatus according to any of the foregoing claims, **characterised in that** the feed means (32) have an end section (36) which is mobile together with the sack (17).

7. The apparatus according to any of the foregoing claims, **characterised in that** it comprises support means (150) for a container which are designed to support the sack container in the open condition : for filling by the feed means, the sack opening extending in a substantially horizontal plane.

8. The apparatus according to any of the foregoing claims, **characterised in that** there are support means for a container which comprise a frame (150) extending to the rear.

9. The apparatus according to any of the foregoing claims, **characterised in that** there are means (154) for connecting the container to the apparatus.

10. The apparatus according to claim 9, **characterised in that** the means (154) for connecting the sack are such that they form means for sack traction in a radial direction.

11. The apparatus according to claim 9 or 10, **characterised in that** the sack connecting means (154) comprise a plurality of hook elements (156) for corresponding loop elements on the sack.

12. The apparatus according to any of the foregoing claims, **characterised in that** it comprises support means (150) for a container which comprise releasable retaining means for the container.

13. The apparatus according to any of the foregoing claims from 9 to 12, **characterised in that** the sack connecting means are of the type which can be enabled and disabled.

14. The apparatus according to any of the foregoing claims from 10 to 13, **characterised in that** the sack connecting means comprise pin means mobile between a position in which they support the sack and a position in which they release the sack.

15. The apparatus according to any of the foregoing claims from 10 to 14, **characterised in that** the sack connecting means comprise pin means extending horizontally.

16. The apparatus according to any of the foregoing claims from 10 to 15, **characterised in that** the sack connecting means comprise a corresponding engagement surface from which the pin means extend.

17. The apparatus according to claim 16, **characterised in that** the pin means extend within a corresponding hole made in the contact surface so that they can move between an extended position in which they support the sack and a retracted position inside the hole in which they release the sack.

18. The apparatus according to any of the foregoing claims, **characterised in that** the unloading position is a position in which the container is unloaded onto the ground.

19. The apparatus according to any of the foregoing claims, **characterised in that** the unloading position is a lifted position.

20. The apparatus according to any of the foregoing claims, **characterised in that** on the apparatus support framework there are suitable means (111) for housing the sacks to be filled.

## Patentansprüche

1. Vorrichtung (10) zum Bearbeiten eines Gutes pflanzlichen Ursprungs, vorzugsweise in Form von Schnittgut oder dergleichen, insbesondere bestehend aus abgeschnittenen Trieben; worin die Vorrichtung Folgendes beinhaltet: einen Trägerrahmen (15) zum Tragen von Mitteln (12) zum Aufsammeln des Schnittgutes, Mittel (18) zum Zerkleinern des Schnittgutes (13), und Behälterfüllmittel, die zum Füllen eines sackförmigen Behälters (17) geeignet sind, worin die Füllmittel Mittel zum Zuführen des Gutes zu einem geeigneten Behälter beinhalten, die einen Förderkanal (32) für das Schnittgut umfassen; worin die Sackbehälterfüllmittel Trägermittel (150) für einen sackförmigen Behälter beinhalten; wobei die Vorrichtung ferner Mittel zum Bewegen des Behälters (17) zwischen einer Arbeitsstellung und einer Entladestellung beinhaltet und **dadurch gekennzeichnet ist, dass** im normalen Arbeitszustand der Sack vom Boden abgehoben ist.

2. Vorrichtung nach Anspruch 1, **dadurch gekennzeichnet, dass** die Mittel zum Zuführen des zerkleinerten Gutes einen Abschnitt (34) aufweisen, der an dem Rahmen der Vorrichtung befestigt ist.

3. Vorrichtung nach einem der vorhergehenden Ansprüche, **dadurch gekennzeichnet, dass** die Schnittgutzuführmittel einen Endabschnitt (36) aufweisen, der Mittel für die verteilte Ausgabe des Gutes (13) bildet.

4. Vorrichtung nach Anspruch 3, **dadurch gekennzeichnet, dass** die Mittel für die verteilte Ausgabe des Gutes (13) durch eine Längsausdehnung des Förderkanals (36) mit einem großen gekrümmten Abschnitt (44) auf der äußeren oder hinteren Seite des Endkanalabschnitts (36) gebildet werden.

5. Vorrichtung nach einem der vorhergehenden Ansprüche, **dadurch gekennzeichnet, dass** die Schnittgutzuführmittel einen Endabschnitt (36) mit einer nach unten gerichteten breiten Öffnung (42) aufweisen, die das Herabfallen des Schnittgutes (13) erlaubt.

6. Vorrichtung nach einem der vorhergehenden Ansprüche, **dadurch gekennzeichnet, dass** die Zuführmittel (32) einen Endabschnitt (36) aufweisen, der zusammen mit dem Sack (17) beweglich ist.

7. Vorrichtung nach einem der vorhergehenden Ansprüche, **dadurch gekennzeichnet, dass** sie Trägermittel (150) für einen Behälter beinhaltet, die dafür ausgelegt sind, den sackförmigen Behälter im geöffneten Zustand für die Befüllung durch die Zuführmittel zu tragen, wobei die Sacköffnung auf einer im Wesentlichen horizontalen Ebene liegt.

8. Vorrichtung nach einem der vorhergehenden Ansprüche, **dadurch gekennzeichnet, dass** Trägermittel für einen Behälter vorgesehen sind, die einen sich nach hinten erstreckenden Rahmen (150) beinhalten.

9. Vorrichtung nach einem der vorhergehenden Ansprüche, **dadurch gekennzeichnet, dass** Mittel (154) zur Befestigung des Behälters an der Vorrichtung vorgesehen sind.

10. Vorrichtung nach Anspruch 9, **dadurch gekennzeichnet, dass** die Mittel (154) zur Sackbefestigung derart ausgeführt sind, dass sie Mittel zum Ziehen des Sackes in einer radialen Richtung bilden.

11. Vorrichtung nach Anspruch 9 oder 10, **dadurch gekennzeichnet, dass** die Sackbefestigungsmittel (154) mehrere Hakenelemente (156) für entsprechende Schlaufenelemente an dem Sack beinhalten.

12. Vorrichtung nach einem der vorhergehenden Ansprüche, **dadurch gekennzeichnet, dass** sie Trägermittel (150) für einen Behälter beinhaltet, die lösbare Haltemittel für den Behälter beinhalten.

13. Vorrichtung nach einem der vorhergehenden Ansprüche von 9 bis 12, **dadurch gekennzeichnet, dass** die Sackbefestigungsmittel der Gattung sind, die aktiviert und deaktiviert werden können.

14. Vorrichtung nach einem der vorhergehenden Ansprüche von 10 bis 13, **dadurch gekennzeichnet, dass** die Sackbefestigungsmittel Zapfenmittel beinhalten, die zwischen einer Stellung, in der sie den Sack tragen, und einer Stellung, in der sie den Sack freigeben, beweglich sind.

15. Vorrichtung nach einem der vorhergehenden Ansprüche von 10 bis 14, **dadurch gekennzeichnet, dass** die Sackbefestigungsmittel Zapfenmittel beinhalten, die sich in horizontaler Richtung erstrecken.

16. Vorrichtung nach einem der vorhergehenden Ansprüche von 10 bis 15, **dadurch gekennzeichnet, dass** die Sackbefestigungsmittel eine entsprechende Eingriffsfläche aufweisen, von der aus sich die Zapfenmittel erstrecken.

17. Vorrichtung nach Anspruch 16, **dadurch gekennzeichnet, dass** sich die Zapfenmittel in einer entsprechenden Öffnung erstrecken, die in der Kontaktfläche ausgebildet ist, so dass sie zwischen einer ausgefahrenen Stellung, in der sie den Sack tragen, und einer zurückgezogenen Stellung, in der sie den Sack freigeben, beweglich sind.

18. Vorrichtung nach einem der vorhergehenden Ansprüche, **dadurch gekennzeichnet, dass** die Entladestellung eine Stellung ist, in welcher der Behälter auf den Boden ausgegeben wird.

19. Vorrichtung nach einem der vorhergehenden Ansprüche, **dadurch gekennzeichnet, dass** die Entladestellung eine angehobene Stellung ist.

20. Vorrichtung nach einem der vorhergehenden Ansprüche, **dadurch gekennzeichnet, dass** auf dem Trägerrahmen der Vorrichtung geeignete Mittel (111) zur Aufnahme der zu füllenden Säcke vorgesehen sind.

## Revendications

1. Un appareil (10) pour le traitement d'un matériau d'origine végétale, de préférence sous la forme de sarments ou similaires, consistant surtout en sarments taillés; tel appareil comprenant un châssis de support (15) pour supporter des moyens (12) de récupération du matériau, des moyens (18) pour hacher le matériau (13), et des moyens de remplissage d'un contenant adaptés pour remplir un contenant (17) sous forme de sac, les moyens de remplissage comprennent des moyens d'alimentation du matériau vers un contenant adéquat qui comprennent un conduit (32) de transport du matériau; lesdits moyens de remplissage d'un contenant - sac comprenant des moyens (150) de support d'un contenant - sac; tel appareil comprenant en outre des moyens destinés à mouvoir le contenant (17) entre une position opérationnelle et une position de déchargement, et étant **caractérisé en ce que**, dans la condition opérationnelle normale, le sac est suspendu au-dessus du sol.

2. L'appareil selon la revendication 1, **caractérisé en ce que** les moyens d'alimentation du matériau haché ont un tronçon (34) fixé au châssis de l'appareil.

3. L'appareil selon l'une quelconque des revendications précédentes, **caractérisé en ce que** les moyens d'alimentation du matériau ont un tronçon terminal (36) qui définit des moyens d'émission répartie du matériau (13).

4. L'appareil selon la revendication 3, **caractérisé en ce que** les moyens d'émission répartie du matériau (13) sont définis par une extension longitudinale du conduit de transport (36), avec un grand tronçon courbe (44) sur l'extérieur ou l'arrière dudit conduit terminal (36).

5. L'appareil selon l'une quelconque des revendications précédentes, **caractérisé en ce que** les moyens d'alimentation du matériau ont un tronçon terminal (36) présentant une grande ouverture (42) orientée vers le bas, pour permettre au matériau (13) de tomber.

6. L'appareil selon l'une quelconque des revendications précédentes, **caractérisé en ce que** les moyens d'alimentation (32) ont un tronçon terminal (36) qui est mobile avec le sac (17).

7. L'appareil selon l'une quelconque des revendications précédentes, **caractérisé en ce qu'**il comprend des moyens (150) de support d'un contenant qui sont destinés à supporter le contenant - sac dans la condition ouverte pour en permettre le remplissage par les moyens d'alimentation, l'ouverture du sac se développant dans un plan essentiellement horizontal.

8. L'appareil selon l'une quelconque des revendications précédentes, **caractérisé en ce que** des moyens de support d'un contenant sont prévus, comprenant un châssis (150) se développant à l'arrière.

9. L'appareil selon l'une quelconque des revendications précédentes, **caractérisé en ce que** des moyens (154) sont prévus pour fixer le contenant à l'appareil.

10. L'appareil selon la revendication 9, **caractérisé en ce que** les moyens (154) de fixation du sac sont tels qu'ils définissent des moyens de traction du sac dans une direction radiale.

11. L'appareil selon la revendication 9 ou 10, **caractérisé en ce que** les moyens (154) de fixation du sac comprennent une pluralité d'éléments en crochet (156) pour des éléments en boucle correspondants prévus sur le sac.

12. L'appareil selon l'une quelconque des revendications précédentes, **caractérisé en ce qu'**il comprend des moyens (150) de support d'un contenant qui comprennent des moyens de retenue relâchable du contenant.

13. L'appareil selon l'une quelconque des revendications précédentes de 9 à 12, **caractérisé en ce que** les moyens de fixation du sac sont du type pouvant être mis en oeuvre ou non mis en oeuvre.

14. L'appareil selon l'une quelconque des revendications précédentes de 10 à 13, **caractérisé en ce que** les moyens de fixation du sac comprennent des moyens à goupille mobiles entre une position dans laquelle ils supportent le sac et une position dans laquelle ils libèrent le sac.

15. L'appareil selon l'une quelconque des revendications précédentes de 10 à 14, **caractérisé en ce que** les moyens de fixation du sac comprennent des moyens à goupille à développement horizontal.

16. L'appareil selon l'une quelconque des revendications précédentes de 10 à 15, **caractérisé en ce que** les moyens de fixation du sac comprennent une surface de prise correspondante à partir de laquelle se développent les moyens à goupille.

17. L'appareil selon la revendication 16, **caractérisé en ce que** les moyens à goupille se développent dans un trou correspondant réalisé dans la surface de contact de manière à ce qu'ils puissent se déplacer entre une position étendue dans laquelle ils supportent le sac et une position rentrée à l'intérieur du trou dans laquelle ils libèrent le sac.

18. L'appareil selon l'une quelconque des revendications précédentes, **caractérisé en ce que** la position de déchargement est une position dans laquelle le contenant est déchargé sur le sol.

19. L'appareil selon l'une quelconque des revendications précédentes, **caractérisé en ce que** la position de déchargement est une position soulevée.

20. L'appareil selon l'une quelconque des revendications précédentes, **caractérisé en ce qu'**il y a, sur le châssis de support de l'appareil, des moyens (111) appropriés pour loger les sacs à remplir.
